# EUROPÄISCHE PATENTSCHRIFT

(11) **EP 3 241 995 B1**
(45) Veröffentlichungstag und Bekanntmachung des Hinweises auf die Patenterteilung: **09.03.2022**
(21) Anmeldenummer: 17165613.5
(22) Anmeldetag: 07.04.2017
(51) Int. Cl.: F01D 5/26, F01D 9/04, F01D 25/06, F01D 5/16

(54) **LEITSCHAUFELSEGMENT FÜR EINE TURBOMASCHINENSTUFE**
VANE SEGMENT FOR A STAGE OF A TURBOMACHINE
SEGMENT D'AUBE DIRECTRICE POUR UNE TURBO-MACHINE

(30) Priorität: 11.04.2016 DE 102016205997
(43) Veröffentlichungstag der Anmeldung: 08.11.2017
(73) Patentinhaber: MTU Aero Engines AG, 80995 München (DE)
(72) Erfinder: Schlemmer, Markus, 84048 Mainburg / Sandelzhausen (DE); Hartung, Andreas, 81829 München (DE); Richter, Karl-Hermann, 85229 Markt Indersdorf (DE); Hanrieder, Herbert, 85411 Hohenkammer (DE)

(56) Entgegenhaltungen:
- WO-A1-2012/065595
- US-A1- 2014 348 657
- US-B1- 8 157 507

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*200 7-2013*) für Clean Sky Joint Technology Initiative gefördert.

### TECHNISCHES GEBIET

Die vorliegende Erfindung betrifft ein Leitschaufelsegment für eine Turbomaschinenstufe, eine Turbomaschinenstufe, insbesondere Verdichter- oder Turbinenstufe, mit dem Leitschaufelsegment sowie eine Turbomaschine, insbesondere Gasturbine, mit der Turbomaschinenstufe.

### STAND DER TECHNIK

Aus der eigenen WO 2012/095067 A1 ist es bekannt, an Leitschaufeln einer Gasturbine Impulskörper anzuordnen, die zum Stoßkontakt mit der Schaufeln vorgesehen sind.

Hierdurch kann ein neuartiges Konzept der Anmelderin zur Reduzierung von unerwünschten Schwingungen realisiert werden, welches im Wesentlichen nicht auf Reibungsdissipation, sondern einer Verstimmung von Eigenformen und -frequenzen durch Stöße der Impulskörper basiert. Zu weiteren Details dieses Konzepts zur Verstimmung wird ergänzend auf die WO 2012/095067 A1 Bezug und deren Inhalt ausdrücklich in die vorliegende Offenbarung aufgenommen.

Zusätzlich wird auch auf die Dokumente US20140348657A1, WO2012065595A1 und US8157507B1 hingewiesen.

### TECHNISCHE AUFGABE UND ZUSAMMENFASSUNG DER ERFINDUNG

Eine Aufgabe einer Ausführung der vorliegenden Erfindung ist es, das Betriebs-, insbesondere Schwingungsverhalten einer Turbomaschine, insbesondere einer Gasturbine, zu verbessern.

Diese Aufgabe wird durch ein Leitschaufelsegment mit den Merkmalen des Anspruchs 1 gelöst. Anspruch 11 bzw. 12 stellt eine Turbomaschinenstufe, insbesondere eine Verdichter- oder Turbinenstufe, mit einem oder mehreren hier beschriebenen Leitschaufelsegmenten bzw. eine Turbomaschine, insbesondere eine Gasturbine, insbesondere eine Flugtriebwerk-Gasturbine, mit einer oder mehreren solchen Turbomaschinenstufen unter Schutz. Vorteilhafte Ausführungsformen der Erfindung sind Gegenstand der Unteransprüche.

Nach einer Ausführung der vorliegenden Erfindung weist ein(e) Leitschaufelsegment bzw. Leitschaufelbaugruppe, insbesondere Leitschaufelcluster, für eine Turbomaschinenstufe, insbesondere eine Verdichter- oder Turbinenstufe, einer Turbomaschine, insbesondere Gasturbine, insbesondere Flugtriebwerk-Gasturbine, insbesondere wenigstens ein Leitschaufelsegment wenigstens einer Turbomaschinenstufe, insbesondere Verdichter- oder Turbinenstufen, für eine bzw. einer Turbomaschine, insbesondere Gasturbine, insbesondere Flugtriebwerk-Gasturbine, ein Innenringsegment und mehrere Leitschaufeln, insbesondere Leitschaufelblätter und/oder zur Strömungsumlenkung und/oder Umsetzung von kinetischer in Druckenergie, auf, die an diesem Innenringsegment angeordnet sind.

Das Innenringsegment ist radial innen von den Leitschaufeln des Leitschaufelsegments angeordnet und/oder mit diesen integral ausgebildet oder zerstörungsfrei lösbar oder nicht-zerstörungsfrei-lösbar verbunden.

In einer Ausführung sind ein oder mehrere hier beschriebene und/oder ein oder mehrere weitere Leitschaufelsegmente in Umfangsrichtung nebeneinander angeordnet und bilden ein Leitgitter, insbesondere ein Vor- und/oder Nachleitgitter, der Turbomaschine(nstufe) bzw. sind hierzu vorgesehen bzw. eingerichtet.

In einer Ausführung sind die Innenringsegmente der in Umfangsrichtung nebeneinander angeordneten Leitschaufelsegmente gegeneinander, insbesondere mittels zerstörungsfrei lösbar oder nicht-zerstörungsfrei-lösbar befestigter Dichtbleche, abgedichtet und/oder begrenzen radial (innen) einen Strömungskanal der Turbomaschine(nstufe) bzw. sind hierzu eingerichtet, sie können insbesondere einen (segmentierten) Innenring des Leitgitters bilden bzw. hierzu eingerichtet sein.

Die Richtungsangabe "axial" bezieht sich vorliegend insbesondere auf eine Einbaulage des Leitschaufelsegments und/oder eine Richtung parallel zu einer Rotations- bzw. (Haupt)Maschinenachse der Turbomaschine(nstufe), die Richtungsangabe "radial" insbesondere auf eine Einbaulage des Leitschaufelsegments und/oder eine Richtung senkrecht zu einer bzw. der Rotations- bzw. (Haupt)Maschinenachse der Turbomaschine(nstufe), die Richtungsangabe "in Umfangsrichtung" insbesondere auf eine Einbaulage des Leitschaufelsegments und/oder eine Umlaufrichtung um eine bzw. die Rotations- bzw. (Haupt)Maschinenachse der Turbomaschine(nstufe) und/oder eine Richtung tangential zu einer (Haupt)Rotationsrichtung der Turbomaschine(nstufe).

Nach einer Ausführung der vorliegenden Erfindung sind an und/oder in wenigstens einem Bereich des Innenringsegments (in Umfangsrichtung), der sich in Umfangsrichtung
in einem Abschnitt des Innenringsegments (in Umfangsrichtung), welcher sich (in Umfangsrichtung) von einer Stirnseite des Innenringsegments (in Umfangsrichtung) bis zu einer vorliegend ohne Beschränkung der Allgemeinheit als (eine) innere Leitschaufel bezeichneten Leitschaufel, die einer d(ies)er Stirnseite (in Umfangsrichtung, insbesondere unmittelbar) benachbarten, vorliegend ohne Beschränkung der Allgemeinheit als (eine) äußerste Leitschaufel bezeichneten Leitschaufel in Umfangsrichtung, insbesondere unmittelbar, benachbart ist, erstreckt,
   und/oder
höchstens über ein durch eine, insbesondere dieselbe, Stirnseite des Innenringsegments (in Umfangsrichtung) begrenztes (in Umfangsrichtung) äußerstes Drittel, insbesondere Viertel, insbesondere Fünftel, einer, insbesondere maximalen, Länge bzw. Erstreckung des Innenringsegments (in Umfangsrichtung), erstreckt und vorliegend als (ein) Verstimmungsbereich bezeichnet wird,
an und/oder in einem ersten Verstimmungsbereich des Innenringsegments (in Umfangsrichtung), der sich in Umfangsrichtung in einem ersten Abschnitt des Innenringsegments, welcher sich von einer ersten Stirnseite des Innenringsegments (in Umfangsrichtung) bis zu einer inneren Leitschaufel, die einer der ersten Stirnseite (in Umfangsrichtung, insbesondere unmittelbar) benachbarten ersten äußersten Leitschaufel in Umfangsrichtung, insbesondere unmittelbar, benachbart ist, erstreckt, und/oder höchstens über ein durch eine bzw. die erste Stirnseite des Innenringsegments (in Umfangsrichtung) begrenztes erstes äußerstes Drittel, insbesondere Viertel, insbesondere Fünftel, der Länge des Innenringsegments (in Umfangsrichtung), erstreckt, sowie
an und/oder in einem (in Umfangsrichtung gegenüberliegenden) zweiten Verstimmungsbereich des Innenringsegments (in Umfangsrichtung), der sich in Umfangsrichtung in einem dem ersten Abschnitt in Umfangsrichtung gegenüberliegenden zweiten Abschnitt des Innenringsegments, welcher sich von einer der ersten Stirnseite in Umfangsrichtung gegenüberliegenden zweiten Stirnseite des Innenringsegments (in Umfangsrichtung) bis zu einer inneren Leitschaufel, die einer der zweiten Stirnseite (in Umfangsrichtung, insbesondere unmittelbar) benachbarten zweiten äußersten Leitschaufel in Umfangsrichtung, insbesondere unmittelbar, benachbart ist, erstreckt, und/oder höchstens über ein durch eine bzw. die zweite Stirnseite des Innenringsegments (in Umfangsrichtung) begrenztes zweites äußerstes Drittel, insbesondere Viertel, insbesondere Fünftel, der Länge des Innenringsegments (in Umfangsrichtung), erstreckt, (jeweils)
ein oder mehrere Hohlräume angeordnet, in dem bzw. denen (jeweils) ein oder mehrere Impulskörper mit Bewegungsspiel zum Stoßkontakt angeordnet sind. Zumindest ein Hohlraum ist einem, wie in angehängtem Anspruch 1 definiert, separaten Gehäuse untergebracht und für das Bewegungsspiel gelten die Merkmale des Anspruchs 1.

Der bzw. die Impulskörper sind zum Stoßkontakt vorgesehen bzw. führen im Betrieb Stoßkontakte mit dem (jeweiligen) Hohlraum bzw. dessen Wänden aus bzw. sind hierzu bzw. derart ausgebildet. Unter einem Stoßkontakt wird vorliegend insbesondere in fachüblicher Weise ein kurzzeitiger bzw. impulsartiger, insbesondere wenigstens im Wesentlichen vollständig elastischer, und/oder stochastischer bzw. regelloser Kontakt verstanden. Ergänzend wird hierzu auf die WO 2012/095067 A1 Bezug genommen.

Es hat sich überraschend herausgestellt, dass durch die Anordnung von (Hohlräumen mit) Impulskörpern in der Nähe einer oder beider Stirnseiten in Umfangsrichtung insbesondere Schwingungsmoden des Leitschaufelsegments als Ganzes (sogenannte "Clustermoden") besonders wirksam verstimmt bzw. reduziert werden können.

In einer Ausführung ist zusätzlich der bzw. wenigstens ein Verstimmungsbereich mit dem Abschnitt, in dem er sich (in Umfangsrichtung) erstreckt, identisch. Insbesondere kann sich somit der bzw. wenigstens ein Verstimmungsbereich, insbesondere maximal, von der Stirnseite bis zu der inneren Schaufel erstrecken, welche der dieser Stirnseite benachbarten äußersten Leitschaufel benachbart ist, insbesondere also der erste Verstimmungsbereich von der ersten Stirnseite bis zu der der ersten äußersten Leitschaufel benachbarten inneren Schaufel und/oder der zweite Verstimmungsbereich von der zweiten Stirnseite bis zu der der zweiten äußersten Leitschaufel benachbarten inneren Schaufel.

In einer anderen Ausführung ist zusätzlich der bzw. wenigstens ein Verstimmungsbereich (in Umfangsrichtung) kürzer als der Abschnitt, in dem er sich (in Umfangsrichtung) erstreckt. Insbesondere kann also eine der (insbesondere ersten bzw. zweiten) Stirnseite zugewandte (in Umfangsrichtung) äußere Grenze des bzw. wenigstens eines (insbesondere des ersten bzw. zweiten) Verstimmungsbereichs (in Umfangsrichtung) von dieser Stirnseite zu der inneren Schaufel hin und/oder eine der (insbesondere ersten bzw. zweiten) Stirnseite abgewandte (in Umfangsrichtung) innere Grenze des bzw. wenigstens eines (insbesondere des ersten bzw. zweiten) Verstimmungsbereichs (in Umfangsrichtung) von der inneren Schaufel zu der Stirnseite hin beabstandet sein.

In einer Ausführung erstreckt sich zusätzlich der bzw. wenigstens einer der Verstimmungsbereich(e jeweils) von (s)einer der Stirnseite abgewandten inneren Grenze (in Umfangsrichtung) höchstens bis zu der äußersten Leitschaufel, insbesondere der erste Verstimmungsbereich von (s)einer der ersten Stirnseite abgewandten inneren Grenze (in Umfangsrichtung) höchstens bis zu der ersten äußersten Leitschaufel und/oder der zweite Verstimmungsbereich von (s)einer der zweiten Stirnseite abgewandten inneren Grenze (in Umfangsrichtung) höchstens bis zu der zweiten äußersten Leitschaufel.

Es hat sich überraschend herausgestellt, dass durch die Anordnung von (Hohlräumen mit) Impulskörpern zwischen einer (im Umfangsrichtung) äußersten Leitschaufel und der dieser (im Umfangsrichtung unmittelbar benachbarten) inneren Leitschaufel insbesondere Clustermoden besonders wirksam verstimmt bzw. reduziert werden können.

In einer Ausführung ist (in Umfangsrichtung) zusätzlich eine der Stirnseite zugewandte äußere Grenze (in Umfangsrichtung) des bzw. wenigstens eines Verstimmungsbereichs (jeweils) wenigstens 0,5 mm, insbesondere wenigstens 1 mm, von der Stirnseite beabstandet, insbesondere eine der ersten Stirnseite zugewandte äußere Grenze (in Umfangsrichtung) des ersten Verstimmungsbereichs wenigstens 0,5 mm, insbesondere wenigstens 1 mm, von der ersten Stirnseite beabstandet und/oder eine der zweiten Stirnseite zugewandte äußere Grenze (in Umfangsrichtung) des zweiten Verstimmungsbereichs wenigstens 0,5 mm, insbesondere wenigstens 1 mm, von der zweiten Stirnseite beabstandet.

Hierdurch können vorteilhaft vorgenannte Dichtbleche, insbesondere in Dichtblechschlitzen des Innenringsegments, ohne räumlichen Konflikt mit Hohlräumen befestigt werden.

In einer Ausführung sind zusätzlich wenigstens 25% aller an und/oder in dem Innenringsegment angeordneten Impulskörper an und/oder in dem bzw. einem der Verstimmungsbereich(e) angeordnet. In einer Weiterbildung sind an und/oder in einem bzw. dem Verstimmungsbereich alleine oder an und/oder in dem ersten und zweiten Verstimmungsbereich zusammen wenigstens 50%, insbesondere wenigstens 75%, insbesondere wenigstens 90%, insbesondere 100%, aller an und/oder in dem Innenringsegment angeordneten Impulskörper angeordnet.

Es hat sich überraschend herausgestellt, dass durch die Anordnung einer solchen Anzahl, insbesondere Mehrheit, der (Hohlräume mit) Impulskörper(n), insbesondere aller (Hohlräume mit) Impulskörper(n), an und/oder in einem Verstimmungsbereich alleine oder zwei Verstimmungsbereichen zusammen insbesondere Clustermoden besonders wirksam verstimmt bzw. reduziert werden können.

Einer oder mehrere der Impulskörper sind (jeweils) kugelförmig ausgebildet und können aus Metall, Al₂O₃ und/oder CrO₂ hergestellt sein.

Hierdurch kann ein vorteilhafter Stoßkontakt realisiert werden.

In einer Ausführung ist in dem bzw. einem oder mehreren der Hohlräume (jeweils) genau ein Impulskörper angeordnet.

Hierdurch können vorteilhafte Einzelstoßkontakte realisiert werden.

Rein theoretisch ist es auch denkbar, zusätzlich oder alternativ in einer Ausführung in dem bzw. einem oder mehreren der Hohlräume (jeweils) zwei oder mehr Impulskörper anzuordnen.

Hierdurch können auch Stoßkontakte zwischen Impulskörpern realisiert werden.

In einer Ausführung sind der bzw. einer oder mehrere der Impulskörper (jeweils) ungefesselt bzw. frei beweglich in einem Hohlraum angeordnet, der in einer Weiterbildung luftgefüllt sein kann.

Hierdurch kann ein vorteilhafter Stoßkontakt realisiert werden.

Der bzw. einer oder mehrere der Hohlräume sind (jeweils) in einem oder mehreren (von dem Innenringsegment) separat hergestellten Gehäusen angeordnet.

Dabei können in einer Weiterbildung ein oder mehrere Gehäuse (jeweils) ein oder mehrere, wenigstens teilweise mit Impulskörpern bestückte, Hohlräume aufweisen und/oder zerstörungsfrei lösbar oder nicht-zerstörungsfrei-lösbar an bzw. in dem Innenringsegment bzw. dessen, insbesondere erstem und/oder zweitem, Verstimmungsbereich befestigt sein, insbesondere auf einer leitschaufelabgewandten Seite. Zusätzlich oder alternativ können in einer Weiterbildung ein oder mehrere, wenigstens teilweise mit Impulskörpern bestückte, Hohlräume eines oder mehrerer der Gehäuse (jeweils), insbesondere mittels eines, insbesondere gemeinsamen, Deckels, luftdicht (verschlossen) sein.

In einer Ausführung sind an bzw. in dem bzw. wenigstens einem der Verstimmungsbereich(e), insbesondere an bzw. in dem ersten und/oder dem zweiten Verstimmungsbereich jeweils, genau ein Gehäuse oder zwei oder mehr Gehäuse angeordnet. Es hat sich überraschend herausgestellt, dass hierdurch insbesondere Clustermoden besonders wirksam verstimmt bzw. reduziert werden können.

In einer Ausführung weisen der bzw. ein oder mehrere der Impulskörper (jeweils) eine Masse auf, die wenigstens 0,01 Gramm (g), insbesondere wenigstens 0,02 g, und/oder höchstens 0,05 g, insbesondere höchstens 0,03 g, beträgt.

Zusätzlich oder alternativ weisen in einer Ausführung der bzw. ein oder mehrere der Impulskörper (jeweils) einen, insbesondere minimalen oder maximalen, Durchmesser auf, der wenigstens 1 mm und/oder höchstens 5 mm beträgt, insbesondere bei 20°C.

Zusätzlich oder alternativ beträgt in einer Ausführung das Bewegungsspiel des bzw. eines oder mehrerer der Impulskörper(s jeweils) wenigstens 0,01 mm, insbesondere wenigstens 0,1 mm, und/oder wenigstens 1% eines minimalen Durchmessers dieses Impulskörpers. Das Bewegungsspiel des bzw. eines oder mehrerer der Impulskörper(s jeweils) beträgt erfindungsgemäß höchstens 10 mm, insbesondere höchstens 1 mm, oder höchstens 100% eines maximalen Durchmessers dieses Impulskörpers, insbesondere bei 20°C.

Es hat sich überraschend herausgestellt, dass durch diese Parameter bzw. Grenzwerte jeweils bereits einzeln, insbesondere aber in Kombination von zwei oder mehr dieser Parameter bzw. Grenzwerte, eine besonders vorteilhafte Verstimmung bzw. Reduzierung von Clustermoden bewirkt werden kann.

In einer Ausführung erstreckt sich ein Verstimmungsbereich bzw. Abschnitt, der sich bis zu einer Leitschaufel erstreckt, (in Umfangsrichtung) bis zu einem, insbesondere innenringsegmentnächsten, Profil(schnitt) dieser Leitschaufel, insbesondere einer Druck- oder Saugseite der Leitschaufel, insbesondere ihres innenringsegmentnächsten Profil(schnitt)s.

Erfindungsgemäß werden der bzw. einer oder mehrere der Impulskörper zur Verstimmung von Clustermoden des Leitschaufelsegments ausgelegt bzw. verwendet, insbesondere durch eine oder mehrere der vorliegend erläuterten Parameter und/oder experimentell oder mittels Simulation.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
Fig. 1: ein Leitgittersegment einer Turbomaschine nach einer Ausführung der vorliegenden Erfindung in einer axialen Draufsicht; und
Fig. 2: das Leitgittersegment in einer Seitansicht in Umfangsrichtung.

### AUSFÜHRUNGSBEISPIELE

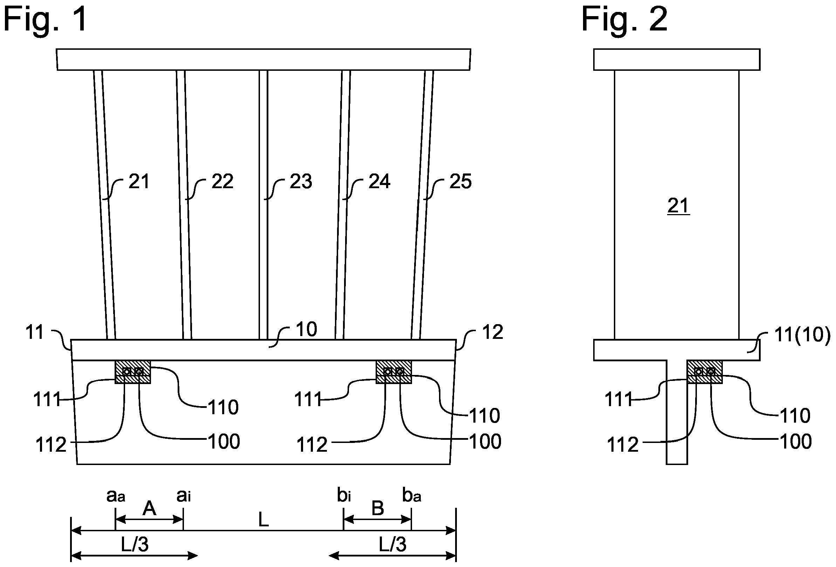

Fig. 1 zeigt ein Leitgittersegment einer Turbomaschine nach einer Ausführung der vorliegenden Erfindung in einer axialen Draufsicht, Fig. 2 in einer Seitansicht in Umfangsrichtung.

Das Leitschaufelsegment weist ein Innenringsegment 10 und mehrere Leitschaufeln 21 - 25 auf, die integral mit dem Innenringsegment 10 ausgebildet sind.

An einem ersten Verstimmungsbereich A (links in Fig. 1) des Innenringsegments 10 und einem zweiten Verstimmungsbereich B (rechts in Fig. 1) des Innenringsegments 10 ist jeweils ein separat hergestelltes Gehäuse 110 mit mehreren luftgefüllten Hohlräumen 112 befestigt, in denen jeweils ungefesselt ein kugelförmiger Impulskörper 100 mit Bewegungsspiel zum Stoßkontakt angeordnet ist, und die durch einen gemeinsamen Deckel 111 luftdicht verschlossen sind.

Der erste Verstimmungsbereich A erstreckt sich in Umfangsrichtung (horizontal in Fig. 1; senkrecht auf der Bildebene der Fig. 2) zwischen einer ersten äußersten Leitschaufel 21 und der dieser benachbarten inneren Leitschaufel 22 und damit insbesondere in einem (in Fig. 1 linken) Abschnitt des Innenringsegments 10, welcher sich von einer ersten Stirnseite 11 des Innenringsegments 10 bis zu der inneren Leitschaufel 22 erstreckt, sowie höchstens über ein durch die erste Stirnseite 11 des Innenringsegments 10 begrenztes erstes äußerstes Drittel einer Länge L des Innenringsegments in Umfangsrichtung, insbesondere höchstens von seiner der ersten Stirnseite 11 abgewandten inneren Grenze aᵢ bis zur ersten äußersten Leitschaufel 21. Seine der ersten Stirnseite 11 zugewandte äußere Grenze aₐ ist wenigstens 1 mm von der ersten Stirnseite 11 beabstandet.

In analoger Weise erstreckt sich der zweite Verstimmungsbereich B in Umfangsrichtung (horizontal in Fig. 1; senkrecht auf der Bildebene der Fig. 2) zwischen einer zweiten äußersten Leitschaufel 25 und der dieser benachbarten inneren Leitschaufel 24 und damit insbesondere in einem (in Fig. 1 rechten) Abschnitt des Innenringsegments 10, welcher sich von einer zweiten Stirnseite 12 des Innenringsegments 10 bis zu dieser inneren Leitschaufel 24 erstreckt, sowie höchstens über ein durch die zweite Stirnseite 12 des Innenringsegments 10 begrenztes zweites äußerstes Drittel der Länge L, insbesondere höchstens von seiner der zweiten Stirnseite 12 abgewandten inneren Grenze bᵢ bis zur zweiten äußersten Leitschaufel 25. Seine der zweiten Stirnseite 12 zugewandte äußere Grenze bₐ ist wenigstens 1 mm von der zweiten Stirnseite 12 beabstandet.

Obwohl in der vorhergehenden Beschreibung exemplarische Ausführungen erläutert wurden, sei darauf hingewiesen, dass eine Vielzahl von Abwandlungen möglich ist, solange die resultierende Ausführung alle Merkmale des angehängten unabhängigen Anspruchs 1 beinhaltet.

So kann insbesondere auch nur ein Gehäuse 110 mit Hohlräumen 112 bzw. darin aufgenommenen Impulskörpern 100 vorgesehen bzw. das Leitschaufelsegment nur einen einzigen Verstimmungsbereich (A oder B) aufweisen.

Gleichermaßen können außerhalb der vorliegenden Erfindung in einer Abwandlung Hohlräume 112 auch direkt in dem Innenringsegment 10 ausgebildet bzw. Impulskörper 100 ohne separat hergestellte Gehäuse 110 unmittelbar in dem Innenringsegment 10 angeordnet sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt
- 10: Innenringsegment
- 11: erste Stirnseite
- 12: zweite Stirnseite
- 21: erste äußerste Leitschaufel
- 22: innere Leitschaufel
- 23: Leitschaufel
- 24: innere Leitschaufel
- 25: zweite äußerste Leitschaufel
- 100: Impulskörper
- 110: Gehäuse
- 111: Deckel
- 112: Hohlraum
- A: erster Verstimmungsbereich
- a_{a/i}: äußere/innere Grenze
- B: zweiter Verstimmungsbereich
- b_{a/i}: äußere/innere Grenze
- L: Länge

Bezugszeichenliste

## Patentansprüche

1. Leitschaufelsegment für eine Turbomaschinenstufe, das ein Innenringsegment (10) und mehrere Leitschaufeln (21-25) aufweist, die an dem Innenringsegment angeordnet sind;
wobei an und/oder in wenigstens einem Verstimmungsbereich (A; B) des Innenringsegments, der sich in Umfangsrichtung
in einem Abschnitt des Innenringsegments, welcher sich von einer Stirnseite (11; 12) des Innenringsegments bis zu einer inneren Leitschaufel (22; 24), die einer der Stirnseite benachbarten äußersten Leitschaufel (21; 25) in Umfangsrichtung benachbart ist, erstreckt, und/oder
höchstens über ein durch eine Stirnseite (11; 12) des Innenringsegments begrenztes äußerstes Drittel einer Länge (L) des Innenringsegments erstreckt,
wenigstens ein Hohlraum (112) angeordnet ist, in dem wenigstens ein Impulskörper (100) mit Bewegungsspiel zum Stoßkontakt angeordnet ist, **dadurch gekennzeichnet, dass** der Hohlraum (112) in einem separat hergestellten Gehäuse (110), das an bzw. in dem Verstimmungsbereich des Innenringsegments befestigt ist, angeordnet ist, wobei wenigstens ein Impulskörper (100) kugelförmig ausgebildet ist und das Bewegungsspiel dieses Impulskörpers (100) höchstens 10 mm oder höchstens 100% eines maximalen Durchmessers des Impulskörpers beträgt, wobei wenigstens ein Impulskörper (100) zur Verstimmung von Clustermoden des Leitschaufelsegments ausgelegt ist.

2. Leitschaufelsegment nach dem vorhergehenden Anspruch, **dadurch gekennzeichnet, dass** der Verstimmungsbereich (A; B) sich von einer der Stirnseite (11; 12) abgewandten inneren Grenze (aᵢ; bᵢ) höchstens bis zu der äußersten Leitschaufel (21; 25) erstreckt.

3. Leitschaufelsegment nach einem der vorhergehenden Ansprüche, **dadurch gekennzeichnet, dass** eine der Stirnseite (11; 12) zugewandte äußere Grenze (aₐ; bₐ) des Verstimmungsbereichs (A; B) wenigstens 0,5 mm von der Stirnseite beabstandet ist.

4. Leitschaufelsegment nach einem der vorhergehenden Ansprüche, **dadurch gekennzeichnet, dass** wenigstens 25% aller an und/oder in dem Innenringsegment (10) angeordneten Impulskörper (100) an und/oder in dem Verstimmungsbereich (A; B) angeordnet sind.

5. Leitschaufelsegment nach einem der vorhergehenden Ansprüche, **dadurch gekennzeichnet, dass** in wenigstens einem Hohlraum (112) genau ein Impulskörper (100) oder wenigstens zwei Impulskörper (100) angeordnet sind.

6. Leitschaufelsegment nach einem der vorhergehenden Ansprüche, **dadurch gekennzeichnet, dass** wenigstens ein Impulskörper (100) ungefesselt in einem Hohlraum (112) angeordnet ist.

7. Leitschaufelsegment nach einem der vorhergehenden Ansprüche, **dadurch gekennzeichnet, dass** der wenigstens eine Hohlraum luftdicht ist.

8. Leitschaufelsegment nach einem der vorhergehenden Ansprüche, **dadurch gekennzeichnet, dass** wenigstens ein Impulskörper (100) eine Masse aufweist, die wenigstens 0,01 g und/oder höchstens 0,05 g beträgt.

9. Leitschaufelsegment nach einem der vorhergehenden Ansprüche, **dadurch gekennzeichnet, dass** wenigstens ein Impulskörper (100) einen, insbesondere minimalen oder maximalen, Durchmesser aufweist, der wenigstens 1 mm und/oder höchstens 5 mm beträgt.

10. Leitschaufelsegment nach einem der vorhergehenden Ansprüche, **dadurch gekennzeichnet, dass** das Bewegungsspiel wenigstens eines Impulskörpers (100) wenigstens 0,01 mm und/oder wenigstens 1% eines minimalen Durchmessers des Impulskörpers.

11. Turbomaschinenstufe, insbesondere Verdichter-oder Turbinenstufe, mit wenigstens einem Leitschaufelsegment nach einem der vorhergehenden Ansprüche.

12. Turbomaschine, insbesondere Gasturbine, insbesondere Flugtriebwerk-Gasturbine, mit wenigstens einer Turbomaschinenstufe nach dem vorhergehenden Anspruch.

## Claims

1. Guide vane segment for a turbomachine stage, the guide vane segment comprising an inner ring segment (10) and a plurality of guide vanes (21-25) arranged on the inner ring segment;
at least one cavity (112) being arranged on and/or in at least one detuning region (A; B) of the inner ring segment, which detuning region extends in the circumferential direction in a portion of the inner ring segment, which portion extends from an end face (11; 12) of the inner ring segment to an inner guide vane (22; 24) that is adjacent in the circumferential direction to an outermost guide vane (21; 25) adjacent to the end face, and/or which detuning region at most extends over an outermost third, delimited by an end face (11; 12) of the inner ring segment, of a length (L) of the inner ring segment, in which cavity at least one impulse body (100) is arranged with movement clearance for impact contact,
**characterized in that** the cavity (112) is arranged in a separately manufactured housing (110) which is attached to or in the detuning region of the inner ring segment, at least one impulse body (100) being spherical and the movement clearance of this impulse body (100) being at most 10 mm or at most 100% of a maximum diameter of the impulse body, wherein at least one impulse body (100) is designed for detuning cluster modes of the guide vane segment.

2. Guide vane segment according to the preceding claim, **characterized in that** the detuning region (A; B) extends from an inner boundary (aᵢ; bᵢ) facing away from the end face (11; 12) at most to the outermost guide vane (21; 25).

3. Guide vane segment according to either of the preceding claims, **characterized in that** an outer boundary (aa; ba) of the detuning region (A; B) facing the end face (11; 12) is spaced apart from the end face by at least 0.5 mm.

4. Guide vane segment according to any of the preceding claims, **characterized in that** at least 25% of all impulse bodies (100) arranged on and/or in the inner ring segment (10) are arranged on and/or in the detuning region (A; B).

5. Guide vane segment according to any of the preceding claims, **characterized in that** precisely one impulse body (100) or at least two impulse bodies (100) are arranged in a t least one cavity (112).

6. Guide vane segment according to any of the preceding claims, **characterized in that** at least one impulse body (100) is arranged unbound in a cavity (112).

7. Guide vane segment according to any of the preceding claims, **characterized in that** the at least one cavity is airtight.

8. Guide vane segment according to any of the preceding claims, **characterized in that** at least one impulse body (100) has a mass which is at least 0.01 g and/or at most 0.05 g.

9. Guide vane segment according to any of the preceding claims, **characterized in that** at least one impulse body (100) comprises an in particular minimum or maximum diameter which is at least 1 mm and/or at most 5 mm.

10. Guide vane segment according to any of the preceding claims, **characterized in that** the movement clearance of at least one impulse body (100) is at least 0.01 mm and/or at least 1% of a minimum diameter of the impulse body.

11. Turbomachine stage, in particular a compressor or turbine stage comprising at least one guide vane segment according to any of the preceding claims.

12. Turbomachine, in particular a gas turbine, in particular an aircraft engine gas turbine, comprising at least one turbomachine stage according to the preceding claim.

## Revendications

1. Segment d'aube directrice pour un étage de turbomachine présentant un segment de bague intérieure (10) et une pluralité d'aubes directrices (21-25) disposées sur le segment de bague intérieure ;
dans lequel une cavité (112), dans laquelle est disposé au moins un corps d'impulsion (100) comportant un jeu de mouvement permettant un contact d'impact, est disposée au niveau de et/ou dans au moins une zone de désaccord (A ; B) du segment de bague intérieure, laquelle, dans la direction circonférentielle,
s'étend dans une section du segment de bague intérieure, laquelle section s'étend d'une face frontale (11 ; 12) du segment de bague intérieure jusqu'à une aube directrice intérieure (22 ; 24) adjacente à une aube directrice la plus à l'extérieur (21 ; 25) dans la direction circonférentielle et adjacente à la face frontale, et/ou s'étend au plus sur un tiers extérieur d'une longueur(L) du segment de bague intérieure délimité par une face frontale (11 ; 12) du segment de bague intérieure,
**caractérisé en ce que** la cavité (112) est disposée dans un boîtier (110) fabriqué séparément et fixé à ou dans la zone de désaccord du segment de bague intérieure, au moins un corps d'impulsion (100) étant conçu sphérique et le jeu de mouvement dudit corps d'impulsion (100) étant d'au plus de 10 mm ou d'au plus de 100 % d'un diamètre maximal du corps d'impulsion, au moins un corps d'impulsion (100) étant conçu pour désaccorder des modes de vibration du segment d'aube directrice.

2. Segment d'aube directrice selon la revendication précédente, **caractérisé en ce que** la zone de désaccord (A ; B) s'étend d'une limite intérieure (aᵢ ; bᵢ) opposée à la face frontale (11 ; 12) au plus jusqu'à l'aube directrice la plus àl'extérieur (21 ; 25).

3. Segment d'aube directrice selon l'une des revendications précédentes, **caractérisé en ce qu'**une limite extérieure (aa ; ba) de la zone de désaccord (A ; B) faisant face à la face frontale (11 ; 12) est espacée d'au moins 0,5 mm de la face frontale.

4. Segment d'aube directrice selon l'une des revendications précédentes, **caractérisé en ce qu'**au moins 25 % de tous les corps d'impulsion (100) disposés au niveau de et/ou dans le segment de bague intérieur(10) sont disposés au niveau de et/ou dans la zone de désaccord (A ; B).

5. Segment d'aube directrice selon l'une des revendications précédentes, **caractérisé en ce qu'**exactement un corps d'impulsion (100) ou au moins deux corps d'impulsion (100) sont disposés dans au moins une cavité (112).

6. Segment d'aube directrice selon l'une des revendications précédentes, **caractérisé en ce qu'**au moins un corps d'impulsion (100) est disposé amovible dans une cavité (112).

7. Segment d'aube directrice selon l'une des revendications précédentes, **caractérisé en ce que** l'au moins une cavité est étanche à l'air.

8. Segment d'aube directrice selon l'une des revendications précédentes, **caractérisé en ce qu'**au moins un corps d'impulsion (100) présente une masse qui est d'au moins 0,01 g et/ou d'au plus 0,05 g.

9. Segment d'aube directrice selon l'une des revendications précédentes, **caractérisé en ce qu'**au moins un corps d'impulsion (100) présente un diamètre, en particulier minimal ou maximal, d'au moins 1 mm et/ou d'au plus 5 mm.

10. Segment d'aube directrice selon l'une des revendications précédentes, **caractérisé en ce que** le jeu de mouvement d'au moins un corps d'impulsion (100) est d'au moins 0,01 mm et/ou d'au moins 1 % d'un diamètre minimal du corps d'impulsion.

11. Étage de turbomachine, en particulier étage de compresseur ou de turbine, comportant au moins un segment d'aube directrice selon l'une des revendications précédentes.

12. Turbomachine, en particulier turbine à gaz, en particulier turbine à gaz de moteur d'aéronef, comportant au moins un étage de turbomachine selon la revendication précédente.
